# EUROPÄISCHE PATENTSCHRIFT

(11) **EP 1 148 985 B1**
(45) Veröffentlichungstag und Bekanntmachung des Hinweises auf die Patenterteilung: **20.11.2002**
(21) Anmeldenummer: 00901460.6
(22) Anmeldetag: 04.02.2000
(51) Int. Cl.: B29C 45/27, B29C 45/38

(54) **DÜSE ZUM SPRITZGIESSEN VON KUNSTSTOFF**
NOZZLE FOR INJECTION MOULDING OF PLASTICS
BUSE POUR LE MOULAGE PAR INJECTION DES MATIERES PLASTIQUES

(30) Priorität: 04.02.1999 CH 20599
(43) Veröffentlichungstag der Anmeldung: 31.10.2001
(73) Patentinhaber: Stern, Christian René, 3234 Vinelz (CH)
(72) Erfinder: Stern, Christian René, 3234 Vinelz (CH)
(74) Vertreter: Frei, Alexandra Sarah
(86) Internationale Anmeldenummer: CH0000061
(87) Internationale Veröffentlichungsnummer: WO00046008

(56) Entgegenhaltungen:
- WO-A-95/05930
- WO-A-97/02129
- DE-U- 8 618 162
- US-A- 4 662 837
- PATENT ABSTRACTS OF JAPAN vol. 1999, no. 8, 30. Juni 1999 (1999-06-30) -& JP 11 058448 A (SEKISUI CHEM CO LTD), 2. März 1999 (1999-03-02)
- PATENT ABSTRACTS OF JAPAN vol. 9, no. 264 (M-423), 22. Oktober 1985 (1985-10-22) -& JP 60 110416 A (MATSUSHITA DENKI SANGYO KK), 15. Juni 1985 (1985-06-15)

## Beschreibung

Die vorliegende Erfindung betrifft ein Verfahren zur Wärmeleitung in einem Düsenkopf zur Spritzgussverarbeitung von Kunststoffen gemäss dem Oberbegriff des unabhängigen Patentanspruchs.

Beim Verarbeiten von Kunststoffen im Spritzgussverfahren stellt die Temperaturverteilung im zu verarbeitenden Material eines der zentralen Probleme dar. Der zu verarbeitende Kunststoff wird üblicherweise mittels Heizelemente elektrisch erhitzt und anschliessend als Schmelze durch einen Kanal zum Spritzgusswerkzeug geführt, wo er in die Form gepresst wird und erstarrt. Der Kanal, in dem die Schmelze den Weg zwischen dem Bereich der Heizelemente und dem Übergang zur Spritzgussform zurücklegt, wird allgemein üblich als Düse bezeichnet. Aus dem Stand der Technik sind verschiedene Düsen bekannt: Heisskanaldüsen, unbeheizte Düsen oder Maschinendüsen. Diese unterscheiden sich in Form, Aufbau, Komplexität und Verwendung.

Ein bestimmter Kunststoff kann nur in einem bestimmten Temperaturfenster verarbeitet werden. Bei zu starkem Erhitzen werden sie zerstört, bei zu geringen Temperaturen werden sie zähflüssig und erstarren. In der Düse muss der Kunststoff zwischen den Heizelementen und der relativ kalten Form einen Kanal passieren. Die dabei auftretenden Wärmeverluste führen dazu, dass die Schmelze zwischen dem Düseneintritt und dem Düsenaustritt unterschiedliche Temperaturen aufweist. Insbesondere im Bereich des Düsenendes, wo die Düse mit der relativ kalten Spritzgussform dichtend in Kontakt tritt, findet ein grosser Wärmeverlust statt, was dazu führen kann, dass die Schmelze ihre kritische Temperatur unterschreitet und nicht mehr zu verarbeiten ist. Die Temperaturführung im Bereich der Düse stellt daher, aufgrund der sehr beschränkten Platzverhältnisse, ein grosses Problem dar.

Aus dem Stand der Technik sind verschiedene Düsen bekannt, die versuchen das oben beschriebene Problem zu lösen. Keine der bekannten Düsen vermag aber vorbehaltlos zu überzeugen oder sind für gewisse Anwendungsbereiche schlichtweg unbrauchbar, da sie die gewünschte Temperaturverteilung nicht erreichen. Andere wiederum sind mit zusätzlichen Heizelementen, Temperaturmesssonden (mit entsprechender zusätzlicher Elektronik), komplexen, aufwendigen Wärmeleit- und Isolationselementen ausgestattet, so dass ihre Komplexität eine wirtschaftliche Herstellung und einen zuverlässigen Betrieb ausschliessen. Ausserdem entstehen in der Regel sehr hohe thermische Spannungen innerhalb der Düse, welche häufig zu Rissbildung führen.

Eine Düse, welche die sich stellenden Probleme zu lösen versucht, ist aus der japanischen Patentanmeldung JP-62134234 bekannt. Es handelt sich hierbei um eine Düse die an ihrem werkzeugseitigen Ende einen keramischen Aufsatz besitzt. Dieser ist an der Düse mittels einer mechanischen Halterung befestigt und soll eine thermische Entkopplung zwischen dem Werkzeug und der Düse bewirken, so dass der Wärmeverlust der Düse in Grenzen gehalten wird. Dieses System hat aber gravierende Nachteile. Einer davon ist, dass die aufgesetzte Düsenspitze aus Keramik sehr anfällig gegenüber mechanischen Belastungen ist und daher schnell dazu neigt, beschädigt zu werden. Insbesondere die Anpressdrücke zwischen Werkzeug und Düse, welche zum erreichen einer genügenden Dichtheit notwendig sind, stellen ein Problem. Ein weiterer Nachteil besteht darin, dass die Herstellung einer solchen Düse sehr Aufwendig und damit unnötig teuer ist. Ausserdem ist die Temperaturverteilung innerhalb der Düse ungünstig.

JP 11058448 zeigt eine Düse zum Verarbeiten von Kunststoff. Die Düse weist einen wärmeleitenden Bereich auf. Diese Düse weist an ihrer Peripherie verschiedene isolierende Bereiche auf. Die Spitze der Düse ist ebenfalls thermisch isoliert.

JP 60110416 zeigt eine Düse zum Verarbeiten von Kunststoff. Die Düse weist an ihrer Spitze einen Hinterschnitt auf. Der Hinterschnitt dient zum Halten eines Angussbereichs.

US 4,662,837 zeigt eine Vorrichtung zum Spritzgiessen von Kunststoff. Im Innern der Vorrichtung ist eine Düse zu erkennen, die in gewissen Bereichen eine thermische Isolation aufweist.

WO 95/05930 zeigt eine Düse zum Spritzgiessen von Kunststoff. Die Düse weist eine Heizung auf. Im Innern ist ein wärmeleitendes Element angeordnet, welches gegenüber der Düse durch einen isolierenden Spalt abgetrennt ist.

DE 86 18 162.9 zeigt eine Düse zum Spritzgiessen von Kunststoff. Die Düse weist einen wärmeleitendes Element auf, das aufgeschrumpft ist.

WO 97/02129 zeigt eine Düse zum Spritzgiessen von Kunststoff derselben Anmelderin. Die Düse beinhaltet ein Element auf, welches temperaturausgleichend zwischen einem geheizten und einem ungeheizten Düsenteil wirkt.

Es ist Aufgabe der vorliegenden Erfindung, die aus dem Stand der Technik bekannten Nachteile zu vermeiden. Insbesondere soll eine Temperaturführung und Verteilung im Bereich der Düse erreicht werden, welche die Verarbeitungsbedingungen gegenüber dem Stand der Technik nachhaltig verbessert und optimiert. Der Aufbau der Düse soll hierbei möglichst einfach, zuverlässig und kostengünstig sein. Insbesondere sollen thermische Spannungen gezielt minimiert werden.

Die Aufgabe wird durch die im ersten Patentanspruch definierte Erfindung gelöst.

Zweck mäßige Weiterbildungen der Erfindung sind Gegenstand der abhängigen Ansprüche.

Die zentrale Idee der Erfindung besteht in einem Verfahren zur Wärmeleitung in eine Düse, welches den Wärmefluss und die Temperaturverteilung innerhalb des Düsenkopfes steuert. Dieses Verfahren beruht auf dem Einsatz von Wärmeleitelementen die aus geeigneten Materialien bestehen und hinsichtlich Wärmeausdehnungskoeffizienten so gewählt sind, dass thermische Spannungen minimiert werden. Das Verfahren zur Wärmeleitung beruht darauf, zu heisse Bereiche durch Abführen von Wärme zu kühlen, und zu kühle Bereiche durch Zuführen der, u. a. aus den zu heissen Bereichen abgeführten Wärme, zu erwärmen.

Die Erfindung basiert auf einer Weiterentwicklung der aus WO 97 02129 bekannten Vorrichtung.

Das Verfahren beruht auf dem kombinierten Einsatz von verschiedenen Materialien, welche Wärme gut leiten (Wärmeleitzahl λ > 10 W/mK) und Materialien, welche Wärme schlecht leiten (λ < 2 W/mK). Fortan wird im Zusammenhang mit gut wärmeleitenden Materialien von "Wärmeleitern" und bei schlecht wärmeleitenden Materialien von "Wärmeisolatoren" gesprochen. Die hier offenbarte Erfindung löst die gestellte Aufgabe in einfacher Weise: Bereiche, in denen die Kunststoffschmelze zu überhitzen droht, werden durch Wärmeabtransport innerhalb der Düse gekühlt und Bereiche, in denen der Schmelzfluss zu unterkühlen droht, werden durch die u. a. in den zu heissen Bereichen abgeführte Wärme beheizt. Dieses gezielte Temperaturmanagement wird durch die erfindungsgemässe schichtweise Anordnung von Wärmeleitern, Wärmeisolatoren und sich neutral verhaltenden Materialien erreicht.

Die Kombination von verschiedenen Materialien in Bereichen, die hohen Temperaturschwankungen unterliegen, führt häufig zu Problemen, weil die Materialien unverträgliche Wärmeausdehnungskoeffizienten aufweisen. Dies kann zu hohen thermischen Spannungen führen, welche eine Beschädigung eines Bauteils zur Folge haben. Aus diesem Grund wird bei vielen auf dem Markt erhältlichen Düsen versucht, mittels sehr aufwendiger Konstruktionsweisen diese Problematik zu umschiffen. Bei der hier offenbarten Erfindung wird ein ganz anderer Lösungsansatz gewählt. Durch die bevorzugten Materialkombinationen, mit kooperierenden Wärmeausdehnungskoeffizienten, wird dieses Problem von Anfang an vermieden und entsteht dadurch gar nicht. Eine besonders bevorzugte Materialkombination wird durch das Aufbringen von mindestens einer Keramikschicht mittels Plasmaspritzen auf einen metallischen Grundkörper oder einen Bereich aus Keramik erreicht. Die Schichtdicken bewegen sich dabei vorteilhafterweise im Bereich von 0.5 mm bis 1 mm. Je nach Anwendungsgebiet können auch andere Schichtdicken oder Schichtdikken mit variablem Dickenverlauf verwendet werden. Die für die Keramikschichten verwendeten Materialien sind dabei gezielt auf die mit ihnen kombinierten Metalle abgestimmt, indem sie mit deren Wärmeausdehnungskoeffizienten übereinstimmen oder zumindest ähnlich sind und dadurch thermische Spannungen minimieren.

Die erfindungsgemäss verwendeten Keramikmaterialien wirken einerseits als Wärmeisolatoren oder als Wärmeleiter. Ihre Funktionsweise wird durch die Materialwahl bestimmt. Durch das Anbringen der Keramikschichten mittels Plasmaspritzen, können optimale Schichtaufbauten erzielt werden. Ausserdem kann so auf teures Nachbearbeiten praktisch verzichtet werden. Die einzelnen Keramikschichten werden gezielt zur Steuerung des Temperaturhaushaltes der Düse eingesetzt. Durch die erfindungsgemässe, schichtweise Anordnung wird die Temperaturverteilung in der Düse homogenisiert, respektive so gesteuert, dass ein Temperaturausgleich innerhalb des Düse entsteht. Dies garantiert, dass die zu verarbeitenden Kunststoffe im für sie idealen Temperaturfenster verarbeitet werden.

Die keramischen Bereiche können auch getrennt vom Rest des Düse hergestellt werden und mit diesem anschliessend, zum Beispiel mittels geeigneten Klebstoffen, verbunden werden. Ausserdem ist es vorteilhaft, diese so zu gestalten, dass sie eine mechanische Verbindung mit dem Rest der Düse herstellen. Dies kann zum Beispiel dadurch erreicht werden, dass sie in eine Nute eingelassen werden.

Durch die hier offenbarte Erfindung wird es erstmals möglich auf sehr einfach Weise sehr kleine und kompakte Düsen zur Spritzgussverarbeitung von Kunststoffen zu realisieren, die alle gestellten Anforderungen erfüllen.

Das hier offenbarte Verfahren zur Wärmeleitung in einer Düse beruht darauf, dass die Temperaturverteilung und der Wärmefluss innerhalb der Düse durch das schichtweise alternierende Anordnen von mindestens einem Bereich aus wärmeisolierendem Material und mindestens einem Bereich aus wärmeleitendem Material entlang des Düsenkanals homogenisiert wird. Dabei werden vorteilhafterweise Bereiche entlang des Kanals, den die Kunststoffschmelze durchfliesst, durch Wärmeabfuhr gekühlt und/oder andere Bereiche entlang des Kanals, den die Kunststoffschmelze durchfliesst, durch Wärmezufuhr erwärmt werden.

Im folgenden wird die Erfindung anhand von Figuren detailliert beschrieben. Dabei zeigen schematisch:
- Fig. 1: eine Ausführungsform einer erfindungsgemässen Düse in perspektivischer Ansicht,
- Fig. 2 bis 4: Längsschnitte durch verschiedene bevorzugte Ausführungsformen von erfindungsgemässen Düsen und
- Fig. 5 bis 7: Längsschnitte durch verschiedene bevorzugte Ausführungsformen von Keramikschichten,
- Fig. 8: eine weitere bevorzugte Ausführungsform einer erfindungsgemässen Düse.

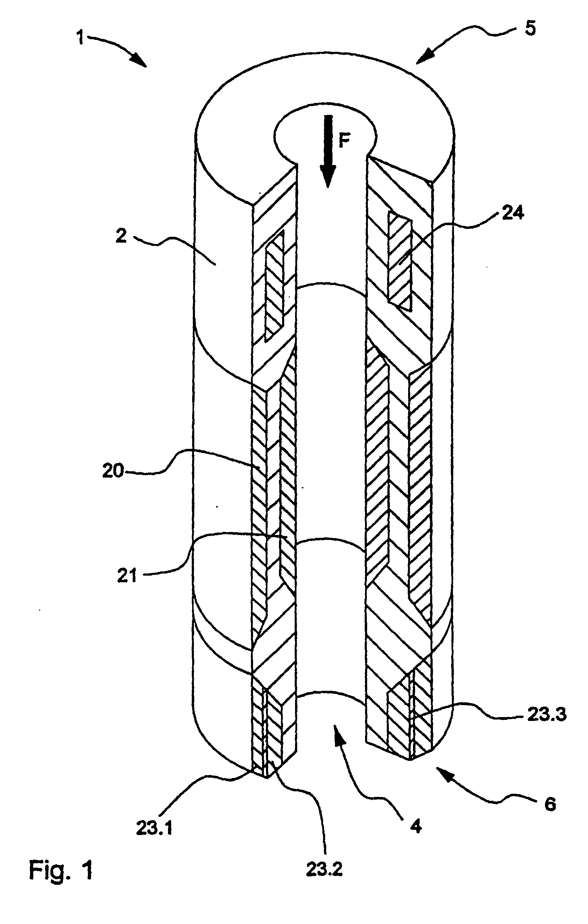

**Figur 1** zeigt schematisch eine bevorzugte Ausführungsform einer Düse 1 in einer perspektivischen Schnittdarstellung. Die Düse 1 besteht vorzugsweise aus mindestens einem metallischen Teil 2 und mindestens einem keramischen Teil 20, 21, 23, 24. Der metallische Teil 2 kann bspw. aus Chromnickelstahl oder Kupfer bestehen. Die keramischen Teile 20, 21, 23, 24 sind vorzugsweise aus Zirkoniumoxid (Zr₂O₃) oder aus Siliziumcarbid (SiC) gefertigt und werden vorzugsweise durch Plasmaspritzen aufgebracht. Sie weisen einen Wärmeausdehnungskoeffizienten auf, welcher mit demjenigen des metallischen Teils 2 korrespondiert, so dass thermische Spannungen minimiert werden. Die Wärmeausdehnungskoeffizienten α sind also derart aufeinander abgestimmt, dass die bei Temperaturen zwischen ca. 0 °C und ca. 300 °C entstehenden thermischen Spannungen zu keinen Beschädigungen der Düse führen. Typische Wärmeausdehnungskoeffizienten α solcher Materialien liegen im Bereich zwischen 4·10⁻⁶ K⁻¹ und 20·10⁻⁶ K⁻¹.

Die keramischen Bereiche 20, 21, 23, 24 sind im Bereich der Aussenkontur (20) des Düsenkopfes 1, der Aussenkontur (21) eines Düsenkanals 4, im Bereich von Düsenanfang 5 und/oder Düsenspitze 6 (23) bzw. als Einbettung (24) im metallischen Teil 2 angeordnet. Die keramischen Bereiche 20, 21, 23, 24 wirken hier als Wärmeisolatoren und/oder als Wärmeleiter und der metallische Teil 2 als Wärmeleiter. Die funktionelle Bedeutung der keramischen Teile 20, 21, 23, 24 ist an den unterschiedlichen Positionen verschieden. Eine genauere Erläuterung hierzu folgt in den Beschreibungen der folgenden Figuren.

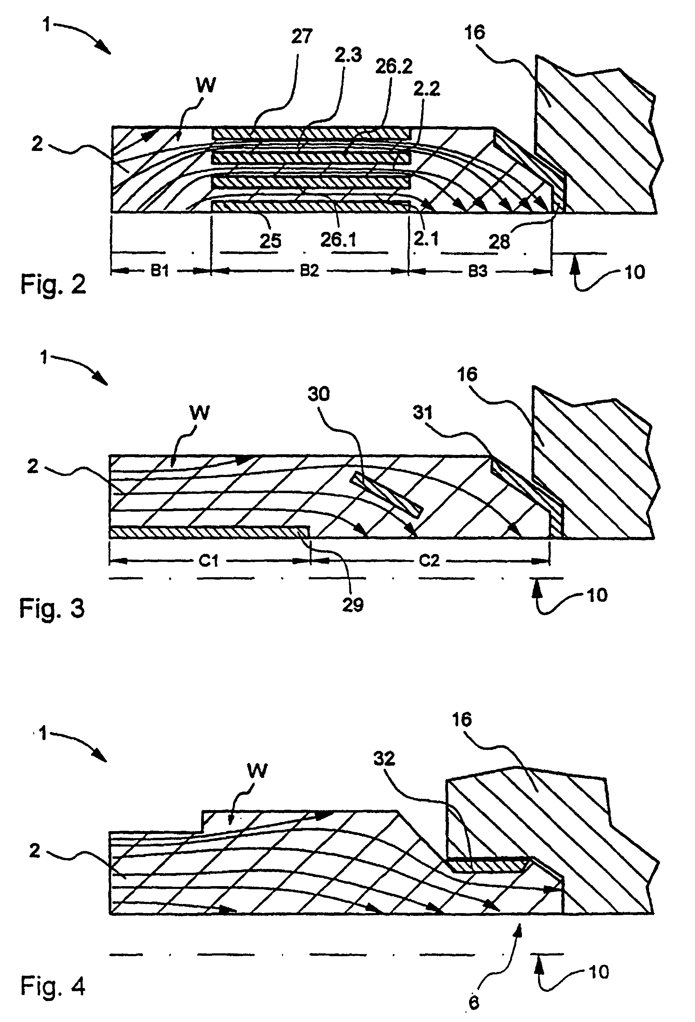

**Figur 2** zeigt schematisch einen Längsschnitt durch eine erste Ausführungsform einer erfindungsgemässen Düse 1. Aufgrund der bevorzugten (aber nicht zwingenden) Rotationssymmetrie ist jeweils nur eine Hälfte des Längsschnittes dargestellt. Die andere, nicht dargestellte Hälfte liegt symmetrisch zu einer strichpunktierten Symmetrieachse 10.

Der in Figur 2 dargestellte Längsschnitt weist hier einen metallischen Teil 2 und vier keramische Bereiche 25, 26.1, 26.2 27, und 28 auf. Der metallische Teil 2 ist gut wärmeleitend, die keramischen Bereiche 25, 26.1, 26.2 27, und 28 sind hier wärmeisolierend. Die hier gezeigte bevorzugte Anordnung der keramischen Bereiche 25, 26.1, 26.2 27, und 28 bewirkt, dass Wärme aus einem heissen Bereich B1, entlang des Düsenkanals 4, gezielt zu einem kühlen Bereich B3 geleitet wird. Der Wärmefluss wird schematisch durch Wärmeflusslinien W verdeutlicht. Die keramischen Bereiche 25, 26.1, 26.2 27, und 28 werden gezielt als Leitelemente für die Wärmeflusslinien W eingesetzt. Sie beeinflussen gezielt die Wärmeflusslinien W durch ihre erfindungsgemässe Anordnung und Dimensionierung. Die Dicke der keramischen Bereiche 25, 26.1, 26.2 27, und 28 muss dabei nicht notwendigerweise, wie hier dargestellt, konstant sein.

Der keramische Bereich 27 umgibt die Düse 1 als Ring und bewirkt, dass die Wärmeflusslinien W in diesem Bereich annähernd parallel zur äusseren Oberfläche der Düse 1 verlaufen und gezielt zur Düsenkopfspitze 6 hin gelenkt werden. Innerhalb der Düse 1 wird eine Schichtung des Temperaturgefälles angestrebt, welche einen der Grundgedanken des erfindungsgemässen Temperaturmanagements ist. Diese Schichtung wird durch eingebettete keramische Bereiche 26.1 und 26.2 unterstützt, welche ein zusätzliches Ausrichten der Wärmeflusslinien W ergeben. Diese sind hier schichtweise zwischen Metallbereichen 2.1 bis 2.3 angeordnet und unterstützen die anisotrope Wärmeleitung in der Düse 1. Die schichtweise Anordnung erinnert an ein Sandwich oder an Zwiebelschalen. Die keramischen Bereich 26.1 und 26.2 wirken als eine Art Armierung im Metallteil 2. Der keramische Bereich 25, welcher hier entlang des Düsenkanals 4 angeordnet ist, bewirkt, dass die Wärmeflusslinien W nicht mit einem temperaturmässig idealen Bereich B2, entlang des Düsenkanals 4, in Kontakt treten. Ein an der Spitze der Düse 1 angeordneter keramischer Bereich 28 wirkt als zusätzliches Leitelement für die Wärmeflusslinien W, indem er ein direktes Übergehen der Wärmeflusslinien W in eine Spritzgussform 16 weitgehend vermeidet und statt dessen diese im Bereich des Düsenendes 6 konzentriert.

Einzelne keramische Bereiche 25, 26.1, 26.2 27, und 28 können erfindungsgemäss auch durch andere, im entsprechenden Bereich funktionell äquivalente Elemente ersetzt werden. Insbesondere ist in gewissen Fällen besonders vorteilhaft, wenn gewisse eingebettete keramische Bereiche 26.1 und 26.2 durch ein Gas oder ein Vakuum ersetzt werden, welche die Wärmeflusslinien W vorteilhaft beeinflussen.

**Figur 3** zeigt schematisch eine weitere Ausführungsform der Erfindung mit zwei keramischen Bereichen 29 und 31 und einem relativ zur Symmetrieachse 10 der Düse 1 konisch zusammenlaufenden keramischen Bereich 30. Die keramischen Bereiche 29, 30, 31 wirken hier als Wärmeisolatoren. Der entlang des Düsenkanals 4, in einer Zone C1, angeordnete keramische Bereich 29 bewirkt, dass die Wärmeflusslinien W, welche hier aus einer (nicht dargestellten) externen Wärmequelle stammen, gezielt in einen Bereich C2 gelenkt werden. Der konisch verlaufende keramische Bereich 30 dient der zusätzlichen Fokussierung oder Ausrichtung der Wärmeflusslinien W. Der keramische Bereich 31 wirkt als thermischer Schild gegenüber der Spritzgussform 16 und verhindert gezielt ein Abdriften der Wärmeflusslinien W in diese.

**Figur 4** zeigt schematisch eine weitere, bevorzugte Ausführungsform einer Düse 1 mit nur einem keramischen Bereich 32. Der keramische Bereich 32 wirkt hier als Wärmeisolator. Die Anordnung des keramischen Bereichs 32 ist hier so gewählt, dass die Wärmeflusslinien W in der Düsenspitze 6 konzentriert werden. Ein gewisser Kontakt zwischen dem metallischen Teil 2 und der Spritzgussform 16 ist hier gewollt und bewirkt ein kontrolliertes übergehen der Wärmeflusslinien W auf die Spritzgussform 16.

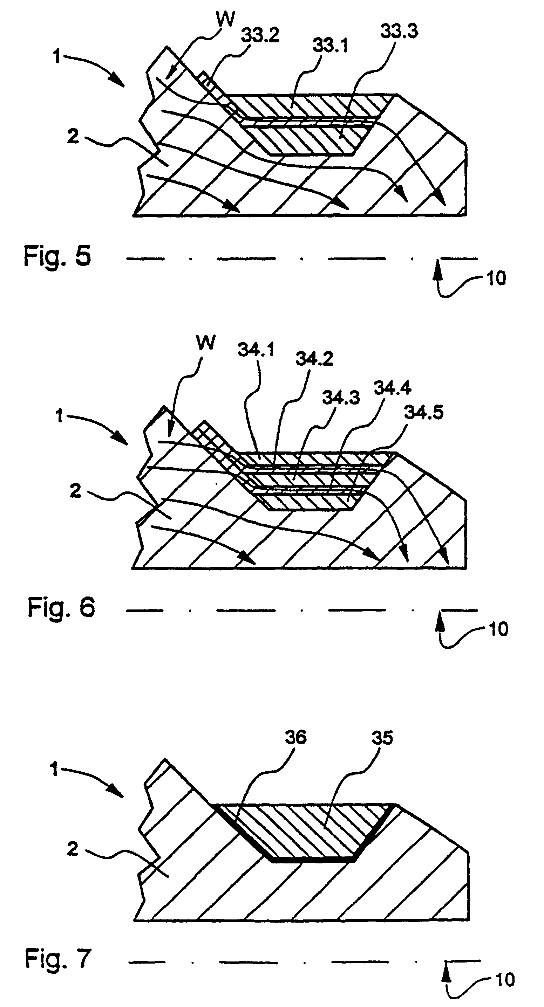

**Figur 5** zeigt eine Ausführungsform einer Düsenspitze 6 gemäss Figur 4 in einer vergrösserten Teilansicht. Eine bevorzugte Ausführungsform eines keramischen Bereichs 3.1 soll hier im Detail erläutert werden.

Der keramische Bereich 33 besteht hier aus zwei unterschiedlichen keramischen Materialien. Die beiden keramischen Materialien weisen unterschiedliche physikalische Eigenschaften auf, woraus sich die angestrebte Funktionsweise ergibt. Das erste keramische Material 33.1, 33.3, besteht hier vorzugsweise aus Zirkoniumoxid (Zr₂O₃) oder einem äquivalenten Material mit einer typischen Wärmeleitfähigkeit von 1.5 bis 2.5 W/mK. Das zweite keramische Material 33.2, besteht hier vorzugsweise aus Siliziumcarbid (SiC) oder einem äquivalenten Material mit einer typischen Wärmeleitfähigkeit von 120 bis 180 W/mK. Das erste Material 33.1, 33.3 wirkt somit, aufgrund seiner im Vergleich zum zweiten Material 33.2 und dem metallischen Teil 2 geringen Wärmeleitfähigkeit, als Wärmeisolator. Das zweite keramische Material 33.2 wirkt hier als Wärmeleiter und steht mit dem metallischen Teil 2 in direktem Kontakt, so dass die Wärmeflusslinien W (nicht näher dargestellt) gezielt beeinflusst und gesteuert werden.

**Figur 6** zeigt eine weitere Ausführungsform einer Düsenspitze 1, gemäss Figur 4, in einer vergrösserten Teilansicht. Ein keramischer Bereich 34 besteht hier aus mehreren Lagen 34.1, 34.2, 34.3, 34.4 und 34.5, die aus unterschiedlichen keramischen Materialien bestehen. Durch die erfindungsgemässe abwechslungsweise Anordnung von gut wärmeleitenden Materialien (34.2, 34.4) und wärmeisolierenden Materialien (34.1, 34.3, 34.5), wird gezielt auf den Verlauf der Wärmeflusslinien W, wie hier beispielhaft dargestellt, Einfluss genommen. Das hier zur Anwendung kommende Temperaturmanagement bewirkt, dass die Wärmeflusslinien W gezielt und mittels Schichten aus gut wärmeleitenden Materialien (34.2, 34.4) zu Bereichen in der Düse 1 geführt werden, die tendenziell für die Verarbeitung von Kunststoffen zu kühl sind. Die Wärmeflusslinien W durchfliessen dabei die Schichten aus gut wärmeleitenden Materialien (34.2, 34.4).

Die Schichten aus gut wärmeleitenden Materialien bestehen vorzugsweise aus keramischen Materialien, Metallen oder funktional äquivalenten Materialien. Dadurch wird ein optimales Temperaturmanagement mit einer idealen Temperaturverteilung im Bereich der Düse 1 erreicht.

Die einzelnen Lagen aus keramischen Materialien 34.1, 34.2, 34.3, 34.4 und 34.5 werden bevorzugt mittels Plasmaspritzen auf einen rotierenden Grundkörper aufgebracht. Dadurch wird ein optimaler Verlauf der Lagendicken der keramischen Materialien 34.1, 34.2, 34.3, 34.4 und 34.5 und deren optimale Anordnung erzielt. Insbesondere weisen die keramischen Materialien 34.1, 34.2, 34.3, 34.4 und 34.5 dadurch ein besonders günstiges Materialgefüge auf. Weitere Vorteile besteht darin, dass, im Gegensatz zu entsprechenden Zonen aus Metall, ein mechanisches Nachbearbeiten weitgehend entfällt, und dass die keramischen Materialien, selbst bei sehr starken Temperaturschwankungen, sehr gut auf dem Grundkörper 2 haften.

**Figur 7** zeigt eine weitere Ausführungsform einer Düse 1, gemäss Figur 4, in einer vergrösserten Teilansicht. Ein keramischer Bereich 35 besteht hier aus einer wärmeisolierenden Keramik. Zwischen dem keramischen Bereich 35 und dem metallischen Teil 2 befindet sich hier eine Haftsubstanz 36, die zur Unterstützung der Haftung zwischen dem metallischen Teil 2 und dem keramischen Bereich 36 beiträgt. Insbesondere falls die Bereiche aus wärmeisolierenden Materialien getrennt hergestellt werden, ist der Einsatz einer Haftsubstanz 36 sinnvoll. Ausserdem dient diese Haftsubstanz auch dazu, allfällige Restspannungen, die aufgrund von Temperaturunterschieden entstehen können, zu kompensieren. Als Haftsubstanzen können beispielsweise entsprechend geeignete Klebstoffe verwendet werden.

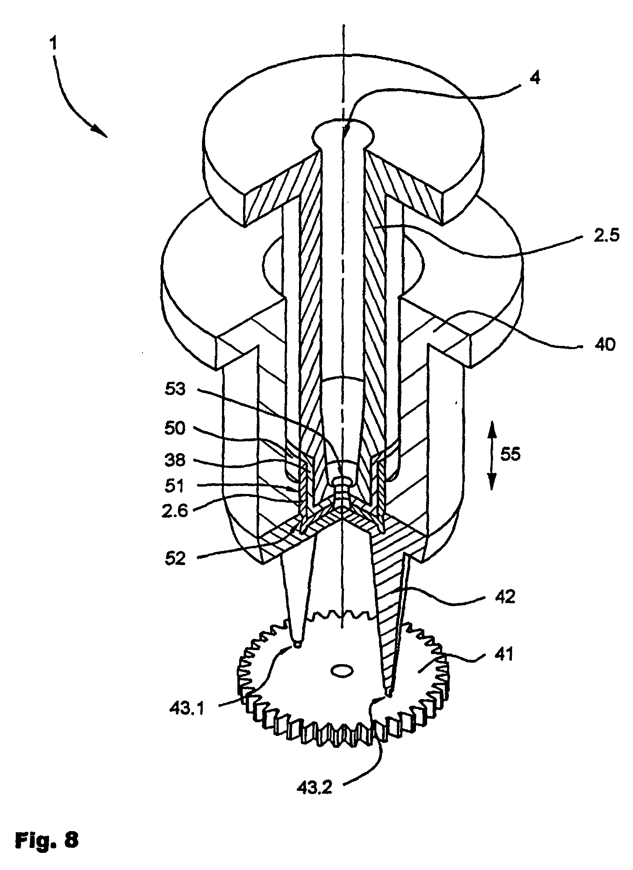

**Figur 8** zeigt eine weitere bevorzugte Ausführungsform einer Düse 1 in einer perspektivischen, teilweise aufgeschnittenen Darstellung. Der Düse 1 weist hier ein inneres und ein äusseres gut wärmeleitendes Teil 2.5 und 2.6 und ein schlecht wärmeleitendes Teil 38 auf, welches die beiden gut wärmeleitenden Teile gegeneinander isoliert. Weiter sind eine Hülse 40 ein Angusskörper 42 und ein Spritzgussteil 41, das hier beispielshalber die Form eines Zahnrades aufweist, zu erkennen. Der Angusskörper 42 ist während dem Herstellungsprozess über zwei Anspritzbereiche 43.1 und 43.2 mit dem Spritzgussteil 41 verbunden. Die Anspritzbereiche 43.1 und 43.2 werden beim Entformen getrennt. Bei der hier gezeigten Ausführungsform wird das Spritzgussteil 41 nicht direkt mit der Düse 1 angespritzt, sondern indirekt über den Angusskörper 42. Dadurch ist es insbesondere möglich sehr kleine und schwierige Teile herzustellen, die ein direktes Anspritzen nicht zulassen. Insbesondere in der Uhrenindustrie sind solche Anordnungen von Vorteil.

Das schlecht wärmeleitende Teil 38 ist in der hier gezeigten Ausführungsform fest und unlösbar zwischen dem inneren Teil 2.5 und dem äusseren Teil 2.6 angeordnet und besteht vorzugsweise aus keramischem Material. Das schlecht wärmeleitende Teil 38 kann beispielsweise als separates Formteil hergestellt werden. Besonders vorteilhaft ist es jedoch, wenn das schlecht wärmeleitende Teil 38 mittels Plasmaspritzen oder einem äquivalenten Verfahren auf dem inneren Teil 2.5 aufgebracht wird. Das innere und das äussere Teil 2.5, 2.6 bestehen vorzugsweise aus Metall. Das äussere Teil 2.6 kann ebenfalls als separates Formteil hergestellt werden. Jedoch ist es besonders vorteilhaft, auch dieses Teil mittels Plasmaspritzen oder einem äquivalenten Verfahren herzustellen und direkt mit dem schlecht wärmeleitenden Teil 38 zu verbinden. Eine Fläche 50 des Teils 2.6 steht zumindest bereichsweise in thermischem Kontakt mit einer korrespondierenden Fläche 51 der Hülse 40. Die Hülse 40 und das äussere Teil 2.6 lassen sind dabei gegeneinander verschieben. Das äussere Teil 2.6 weist mindestens ein Mittel 52 auf, das eine temporäre, kraftschlüssige Verbindung zwischen dem äusseren Teil 2.6 und dem Angusskörper 42 ermöglicht. Dieses Mittel 52 besteht hier aus einem umlaufenden Hinterschnitt.

Die Funktionsweise der hier gezeigten Anordnung unter Verwendung des erfindungsgemässen Verfahrens soll nachfolgend im Detail erläutert werden.

Das Verfahren zur Wärmeleitung in der Düse 1 dient in der hier gezeigten Ausführungsform dazu, das innere Teil 2.5 vom äusseren Teil 2.6 thermisch über das Teil 38 zu isolieren. Das äussere Teil 2.6 steht über die Hülse 40 in Kontakt mit einer Spritzgussform (nicht näher dargestellt) die dem Spritzgussteil 41 und dem Angusskörper 42 sein Aussehen verleiht. Durch den thermischen Kontakt zwischen dem äusseren Teil 2.6 und der Spritzgussform (nicht näher dargestellt) wird das äussere Teil 2.6 und die Hülse 40 durch Wärmeabfuhr gezielt gekühlt, ohne jedoch die Temperatur des inneren Teils 2.5 negativ zu beeinflussen. Die sich in einem Düsenkanal 4 befindliche Schmelze (nicht näher dargestellt) wird aufgrund der erfindungsgemässen Anordnung bis unmittelbar zum Einspritzen auf optimaler Temperatur gehalten. Durch das bewusste Vermeiden einer nachteilhaften Abkühlung und durch eine homogene Temperaturverteilung wird erreicht, dass die Schmelze sehr schnell und ohne übermässige Beanspruchung verarbeitet werden kann. Nach dem Austritt der Schmelze aus der Düse 1 durch eine Austrittsöffnung 53, wird der Raum des Angusskörpers 42 und des Spritzgussteils 41 gebildet. Die Schmelze erstarrt durch den Kontakt mit der Spritzgussform (nicht näher dargestellt) und dem Teil äusseren 2.6 und bildet somit das Spritzgussteil 41 und den Angusskörper 42. Der Angusskörper 42 umschliesst das äussere Teil 2.6 im Bereich des Hinterschnittes 52 so dass der Angusskörper 42 am äusseren Teil 2.6 aufgrund eines gewissen Formschlusses haftet. Dadurch wird erreicht, dass der Angusskörper 42 beim Entformen des Spritzgussteils 41 an der Düse 1 kontrolliert haften bleibt und mit diesem aus dem Bereich der Spritzgussform (nicht näher dargestellt) gebracht werden kann. Der Angusskörper 42 wird anschliessend von der Düse 1 entfernt, indem die Hülse 40 relativ zur Düse 1 in Richtung eines Pfeils 55 verschoben wird. Durch die schichtweise Anordnung von Wärmeleitern und Wärmeisolatoren wird eine gezielte Temperaturschichtung erreicht. Dabei werden die Kontaktflächen zwischen der Düse 1 und den angrenzenden Werkzeugteilen so ausgenutzt, dass einerseits ein Überhitzen der Schmelze vermieden wird, aber auch ein gezieltes partielles Haften des Angusskörpers 42 an der Düse 1 resultiert. Im Vergleich zu den bekannten Anordnungen reduziert sich der Anteil der Teile massiv. Die Schmelze wird schonender Verarbeitet. Weitere Vorteile ergeben sich, je nach Anwendungsgebiet und Einsatzzweck, durch schnellere Zyklen, kleinere Angusskörper und geringere Spannungen und Materialbelastungen. Die Qualität der Spritzgussteile und die Bandbreite der zu verarbeitenden Materialien wird signifikant erweitert. Selbstverständlich können bei Bedarf weitere Teile aus gut und aus schlecht wärmeleitenden Materialien vorgesehen werden, beispielsweise bei besonders langen Düsen 1 oder schwierigen Anspritzsitutationen.

## Patentansprüche

1. Düse (1) zum Spritzgiessen von Kunststoff, wobei die Düse (1) mindestens ein wärmeleitendes Teil (2) und mindestens ein wärmeisolierendes Teil aufweist, die schichtweise angeordnet sind, **dadurch gekennzeichnet, dass** das mindestens eine wärmeleitende Teil (2) aus Metall oder Keramik und das mindestens eine wärmeisolierende Teil aus Keramik (20, 21, 23, 24) besteht und dass mindestens eines dieser Teile (2, 2.4, 2.6, 23.3, 20, 21, 23, 24) mittels Plasmaspritzen hergestellt ist.

2. Düse (1) nach Patentanspruch 1, **dadurch gekennzeichnet, dass** mindestens ein wärmeisolierender Teil (20, 21, 23, 24) aus Zirkoniumoxid (Zr₂O₃), besteht.

3. Düse (1) nach einem der Patentansprüche 1 oder 2, **dadurch gekennzeichnet, dass** mindestens ein wärmeleitender Teil (2, 2.4, 2.6, 23.3) Siliziumcarbid (SiC), Kupfer oder Stahl, besteht.

4. Düse (1) nach einem der vorangehenden Patentansprüche, **dadurch gekennzeichnet, dass** die Wärmeleitfähigkeit (λ) des wärmeisolierenden Materials (20, 21, 23.1, 23.2, 24, 38) kleiner als 2 W/mK ist und/oder die Wärmeleitfähigkeit (λ) des wärmeleitenden Materials (2, 2.5, 2.6, 23.3) grösser als 10 W/mK ist.

5. Düse (1) nach einem der vorangehenden Patentansprüche, **dadurch gekennzeichnet, dass** der Wärmeausdehnungskoeffizient (α) eines wärmeisolierenden Teils (20, 21, 23.1, 23.2, 24) im wesentlichen mit demjenigen eines wärmeleitenden Teils (2, 23.3) übereinstimmt.

6. Düse (1) nach einem der vorangehenden Patentansprüche, **dadurch gekennzeichnet, dass** mindestens ein wärmeisolierender Teil (20, 21, 24) entlang der Aussenkontur der Düse (1) und/oder entlang einem Düsenkanal (4) und/oder zwischen zwei metallischen Teilen (2, 2.5, 2.6) angeordnet ist.

7. Düse (1) nach einem der vorangehenden Patentansprüche, **dadurch gekennzeichnet, dass** mindestens ein wärmeisolierender Teil (28, 38) im Bereich einer Kontaktstelle zu einer Spritzgussform (16) angebracht ist, derart dass ein direkter Wärmefluss zwischen einem wärmeleitenden Teil (2, 2.5) der Düse (1) und der Spritzgussform (16) teilweise oder ganz vermeidbar ist.

8. Düse (1) gemäss einem der vorangehenden Patentansprüche, **dadurch gekennzeichnet, dass** die Düse (1) im Bereich ihrer Spitze (6) ein Mittel (52) zur temporären Aufnahme eines Angusskörpers (42) aufweist.

9. Düse (1) gemäss Anspruch 8, **dadurch gekennzeichnet, dass** das Mittel (52) zur temporären Aufnahme eines Angusskörpers (42) ein Hinterschnitt ist.

10. Düse (1) gemäss einem der Ansprüche 8 oder 9, **dadurch gekennzeichnet, dass** eine Hülse (40) im Bereich der Spitze der Düse (1) gegenüber dieser verschiebbar angeordnet ist und zum Abstreifen eines Angusskörpers (42) dient.

11. Düse (1) gemäss Anspruch 10, **dadurch gekennzeichnet, dass** die Hülse (40) mit mindestens einem gut wärmeleitenden Bereich (2.6) in Kontakt steht, so dass dieser mindestens eine gut wärmeleitende Bereich (2.6) durch Wärmeabfuhr gekühlt wird.

## Claims

1. A nozzle (1) for injection moulding plastics, wherein the nozzle (1) comprises as least one heat-conducting part (2) and at least one heat-insulating part, which are arranged in layers, **characterised in that** the at least one heat-conducting part (2) consists of metal or ceramic and the at least one heat-insulating part consists of ceramic (20, 21, 23, 24) and that at least one of these parts (2, 2.4, 2.6, 23.3, 20, 21, 23, 24) is manufactured by way of plasma spraying.

2. A nozzle (1) according to patent claim 1, **characterised in that** at least one heat-insulating part (20, 21, 23, 24) consists of zirconium oxide (Zr₂O₃).

3. A nozzle (1) according to one of the patent claims 1 or 2, **characterised in that** at least one heat-conducting part (2, 2.4, 2.6, 23.3) consists of silicon carbide (SiC), copper or steel.

4. A nozzle (1) according to one of the preceding patent claims, **characterised in that** the thermal conductivity (λ) of the heat-insulating material (20, 21, 23.1, 23.2, 24, 38) is smaller than 2 W/mK and/or the thermal conductivity (λ) of the heat-conducting material (2, 2.5, 2.6, 23.3) is larger than 10W/mK.

5. A nozzle (1) according to one of the preceding patent claims, **characterised in that** the thermal expansion coefficient (α) of a heat-insulating part (20, 21, 23.1, 23.2, 24) essentially corresponds to that of a heat-conducting part (2, 23.3).

6. A nozzle (1) according to one of the preceding patent claims, **characterised in that** at least one heat-insulating part (20, 21, 24) is arranged along the outer contour of the nozzle (1) and/or along a nozzle channel (4) and/or between two metallic parts (2, 2.5, 2.6).

7. A nozzle (1) according to one of the preceding patent claims, **characterised in that** at least one heat-insulating part (28, 38) is attached in the region of a contact location to an injection moulding mould (16) in a manner such that a direct flow of heat between a heat-conducting part (2, 2.5) of the nozzle (1) and the injection moulding mould (16) may be partly or completely avoided.

8. A nozzle according to one of the preceding patent claims, **characterised in that** the nozzle (1) in the region of its tip (6) comprises a means (52) for the temporary accommodation of a sprue body (42).

9. A nozzle (1) according to claim 8, **characterised in that** the means (52) for the temporary accommodation of a sprue body (42) is an undercut.

10. A nozzle according to one of the claims 8 or 9, **characterised in that** a sleeve (40) in the region of the tip of the nozzle (1) is arranged displaceable with respect to this and serves for scraping a sprue body (42).

11. A nozzle (1) according to claim 10, **characterised in that** the sleeve (40) is in contact with at least one good heat-conducting region (2.6) so that this at least one good heat-conducting region (2.6) is cooled by the leading-away of heat.

## Revendications

1. Buse (1) pour le moulage par injection de matière plastique, où la buse (1) comprend au moins une partie (2) conductrice de la chaleur et au moins une partie isolante de la chaleur, qui sont disposées par couches, **caractérisée en ce que** l'au moins une partie conductrice de la chaleur (2) est faite de métal ou de céramique et l'au moins une partie isolante de la chaleur est faite de céramique (20, 21, 23, 24) et **en ce qu'**au moins une des parties (2, 2.4, 2.6, 23.3, 20, 21, 23, 24) est fabriquée par pulvérisation au plasma.

2. Buse (1) selon la revendication 1, **caractérisée en ce qu'**au moins une partie isolante de la chaleur (20, 21, 23, 24) est faite d'oxyde de zirconium (Zr₂O₃).

3. Buse (1) selon une des revendications 1 ou 2, **caractérisée en ce qu'**au moins une partie conductrice de la chaleur (2, 2.4, 2.6, 23.3) est faite de carbure de silicium (SiC), de cuivre ou d'acier.

4. Buse (1) selon une des revendications précédentes, **caractérisée en ce que** la conductibilité thermique (λ) de la matière isolante de la chaleur (20, 21, 23.1, 23.2, 24, 38) est inférieure à 2 W/mK et/ou la conductibilité thermique (λ) de la matière conductrice de la chaleur (2, 2.5, 2.6, 23.3) est supérieure à 10 W/mK.

5. Buse (1) selon une des revendications précédentes, **caractérisée en ce que** le coefficient de dilatation thermique (α) d'une partie isolante de la chaleur (20, 21, 23.1, 23.2, 24) coïncide sensiblement avec celui d'une partie conductrice de la chaleur (2, 23.3).

6. Buse (1) selon une des revendications précédentes, **caractérisée en ce qu'**au moins une partie isolante de la chaleur (20, 21, 24) est disposée le long du contour extérieur de la buse (1) et/ou le long d'un conduit de buse (4) et/ou entre deux parties métalliques (2, 2.5, 2.6).

7. Buse (1) selon une des revendications précédentes, **caractérisée en ce qu'**au moins une partie isolante de la chaleur (28, 38) est placée dans la région d'une zone de contact avec un moule d'injection (16) de manière qu'un flux de chaleur direct entre une partie conductrice de la chaleur (2, 2.5) de la buse (1) et le moule d'injection (16) puisse être évité en partie ou en totalité.

8. Buse (1) selon une des revendications précédentes, **caractérisée en ce que** la buse (1) présente, dans la région de sa pointe (6) un moyen (52) pour recevoir temporairement une carotte (42).

9. Buse (1) selon la revendication 8, **caractérisée en ce que** le moyen (52) pour recevoir temporairement une carotte (42) est une contre-dépouille.

10. Buse (1) selon une des revendications 8 ou 9, **caractérisée en ce qu'**une douille (40) est disposée dans la région de la pointe de la buse (1) de façon à pouvoir coulisser par rapport à cette dernière et sert à enlever une carotte (42).

11. Buse (1) selon la revendication 10, **caractérisée en ce que** la douille (40) est en contact avec au moins une région bonne conductrice de la chaleur (2.6), de sorte que cette au moins une région bonne conductrice de la chaleur (2.6) est refroidie par dissipation de la chaleur.
